# EUROPÄISCHE PATENTANMELDUNG

(11) **EP 2 685 021 A2**
(43) Veröffentlichungstag der Anmeldung: **15.01.2014**
(21) Anmeldenummer: 13003313.7
(22) Anmeldetag: 29.06.2013
(51) Int. Cl.: E04C 2/04, E04B 5/00, F24D 5/00

(54) **Thermoaktive Fertigteilplatte mit verbesserten akustischen Eigenschaften**

(30) Priorität: 12.07.2012 DE 202012006727 U
(71) Anmelder: Friedrich, Thomas, 54470 Bernkastel-Kues (DE)
(72) Erfinder: Friedrich, Thomas, 54470 Bernkastel-Kues (DE)
(74) Vertreter: Riebling, Peter

(57) **Zusammenfassung**

Thermoaktive Fertigteilplatte bestehend aus mindestens zwei parallel zu einander angeordneten Betonschalen (17, 20) zwischen denen ein Hohlraum (18) angeordnet ist, der gegebenenfalls von einem Dämmmaterial (19) ausgefüllt ist, wobei zwischen der Oberseite der unteren Betonschale (20) und dem Hohlraum (18) ein oder mehrere Luft-Verteilkanäle (23, 24) angeordnet sind, über welche die zu temperierende Luft in eine die Flucht der Deckenseite unterbrechende Ausnehmung (22) eingeleitet wird, die raumdeckenseitig von einer mindestens teilweise luftdurchlässigen Funktionsplatte (15) abgedeckt ist, über welche die temperierte Luft in den Raum unterhalb der Fertigteilplatte einströmt, wobei im Bereich der deckenseitigen, in der unteren Betonschale (20) angeordneten Ausnehmung (22) auf der Funktionsplatte (15) ein mindestens teilweise luftdurchlässiges Vlies (8) angeordnet ist.

## Beschreibung

Die Erfindung betrifft eine thermoaktive Fertigplatte, bestehend aus mindestens zwei parallel zueinander angeordneten Betonschalen, zwischen denen ein Hohlraum angeordnet ist, der gegebenenfalls von einem Dämmmaterial ausgefüllt ist, wobei in mindestens einer der beiden Betonschalen mindestens ein Rohrleitungsregister angeordnet ist, welches von einem temperierten Medium durchflossen ist, wobei zur Verbesserung der akustischen Eigenschaften der Fertigteilplatte in der deckenseitigen Betonschale der Fertigteilplatte eine die Flucht der Deckenseite unterbrechende Ausnehmung angeordnet ist, die von einer Funktionsplatte abgedeckt ist, die aus einem schalldämmenden Material besteht.

Eine solche thermoaktive Fertigplatte ist mit dem Gegenstand der auf den gleichen Anmelder zurückgehenden DE 102009005577A1 bekannt geworden. Der Inhalt dieser Druckschrift soll in vollem Umfang von der Offenbarung der vorliegenden Erfindung umfasst sein.

Nachteil bei dieser Erfindung ist jedoch, dass die thermoaktive Fertigplatte in Bezug auf die akustischen Strömungsgeräusche der Luft, die aus der in der unteren Betonschale angeordneten deckenseitigen Ausnehmung ausströmt, ungünstig war.

Im Übrigen war auch der Luftaustritt über die gesamte Fläche der in der Ausnehmung eingesetzten Funktionsplatte nicht gleichmäßig.

Der Erfindung liegt deshalb die Aufgabe zugrunde, eine thermoaktive Fertigteilplatte mit einer in die Ausnehmung der unteren Betonschale eingesetzten Funktionsplatte so weiterzubilden, dass eine Vergleichmäßigung des über die gesamte Fläche der Funktionsplatte in den Raum ausströmenden Luftstromes gewährleistet ist und dass im Übrigen die akustischen Eigenschaften verbessert sind.

Zur Lösung der gestellten Aufgabe ist die Erfindung durch die technische Lehre des Anspruches 1 gekennzeichnet.

Wesentliches Merkmal der Erfindung ist, dass in der Ausnehmung, jedoch oberhalb der Funktionsplatte und auf dieser auflagernd, mindestens ein teilweise luftdurchlässiges Vlies angeordnet ist.

Mit der gegebenen technischen Lehre ergibt sich der wesentliche Vorteil, dass die akustischen Eigenschaften der Funktionsplatte entscheidend verbessert werden, denn durch die Auflage eines Vlieses, welches mindestens teilweise luftdurchlässig ist, werden Schallreflektionen an der Oberseite der Funktionsplatte verhindert, obwohl es sich um ein relativ dünnes Vlies im Bereich von etwa 0,5 mm bis 5,00 mm handelt.

In einer ersten bevorzugten Ausgestaltung ist vorgesehen, dass dieses Vlies aus einem nonwoven-Fasermaterial besteht, und z. B. aus gepressten Mikrofasern eines Textil- oder Zellulosematerials gebildet ist.

In einer anderen Ausgestaltung ist vorgesehen, dass das Vlies aus einem gewebten oder gewirkten oder gestrickten Textil besteht.

Bei allen vorgenannten Ausführungsformen ist wesentlich, dass eine Schallreflektion des im Bereich der Ausnehmung entstehenden Luftstromes und dessen durch Turbulenzen erzeugten Schall von dem Vlies aufgenommen werden und nicht in den Raum hinein getragen werden.

Weiter ist wesentlich, dass das erfindungsgemäße Vlies auch zur Vergleichmäßigung des über die gesamte Oberfläche aus der Funktionsplatte ausströmenden Luftraumes beiträgt.

Es ist zu berücksichtigen, dass die Luft an der einen Seite der Funktionsplatte eingeleitet wird und sich über deren gesamten Oberfläche gleichmäßig verteilen soll. Die Funktionsplatte hat hierbei bevorzugt gleichmäßig angeordnete Perforationen, obwohl die Erfindung nicht darauf beschränkt ist.

Eine gleichmäßige Luftverteilung gelingt nicht, sofern nicht erfindungsgemäß ein Vlies verwendet wird. Bei Entfall des Vlieses strömt der Luftstrom an der Funktionsplatte an der Seite verstärkt aus, an deren Seite er in die Ausnehmung eingeleitet wurde und er schwächt sich stark an der gegenüberliegenden Stelle der Funktionsplatte ab, die der Einleitungsstelle des Luftstromes über die Funktionsplatte gegenüberliegt.

Um dies zu verhindern, wird das erfindungsgemäße Vlies verwendet, welches mit mikrofeinen Luftdurchlässen dafür sorgt, dass der Luftstrom an der Seite der Funktionsplatte, an der der Luftstrom in die Ausnehmung eingeleitet wird, nicht die Funktionsplatte mit hoher Strömungsgeschwindigkeit (an dieser Seite) durchsetzt. Vielmehr sorgt das erfindungsgemäße Vlies für eine Vergleichmäßigung des aus der Funktionsplatte austretenden Luftstromes, und zwar über die gesamte Fläche der Funktionsplatte hinweggesehen.

In einer Weitergestaltung der Erfindung ist es vorgesehen, dass das Vlies noch zusätzliche Perforationen aufweisen kann.

Solche Perforationen können als feine Bohrungen oder Ausnehmungen in der Oberfläche des Vlieses vorgesehen sein und durchsetzen den gesamten Körper des Vlieses, um zusätzliche Durchströmungsöffnungen zu bilden.

Wenn hingegen das Vlies aus einem gewebten, gewirkten oder gestrickten Textil besteht, bedarf es derartiger zusätzlicher Perforationen in der Regel nicht, weil die durch Maschen gebildeten Ausnehmungen für die gewünschten Perforationen im Vlies sorgen.

Eine weitere Verbesserung der Schalldämmung und der Luftausbreitung ergibt sich dann, wenn in einer Weiterbildung der Erfindung vorgesehen ist, dass die Ausnehmung mit einem Dämmmaterial, in der Art von Glaswolle oder dergleichen gefüllt ist.

Auch hier erfolgen eine wirksame Bedämpfung aller Schall ausbreitenden Oberflächen im Bereich der Ausnehmung in der Betonschale und eine Vergleichmäßigung des Luftstromes.

Ein besonders einfacher Einbau der Funktionsplatte ergibt sich dann, wenn diese als Teil eines decken- und stirnseitig geöffneten Kastens ausgebildet ist, der sich mit seinen Seitenwänden in die Ausnehmung hinein erstreckt. Auf diese Weise kann der Kasten einfach mit seinen Seitenwänden in die konisch in Richtung zur Funktionsplatte sich erweiternde Ausnehmung eingeklinkt werden und hält sich dann dort selbsttätig.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigen:
- Figur 1:: Draufsicht auf eine thermoaktive Fertigteilplatte nach dem Gegenstand der DE 10 2009 005 577 A1
- Figur 2:: Schnitt gemäß der Linie 1-1 in Figur 1
- Figur 3:: Schnitt gemäß der Linie 2-2 in Figur 1 mit Darstellung weiterer Einzelheiten nach der Erfindung
- Figur 4:: Schnitt durch eine erste Ausführungsform durch die Ausnehmung mit Funktionsplatte
- Figur 5:: eine gegenüber Figur 4 abgewandelte Ausführungsform
- Figur 6:: eine weiter gegenüber Figur 4 und 5 abgewandelte dritte Ausführungsform
- Figur 7:: eine weitere Abwandlung der Ausführungsform nach Figur 6

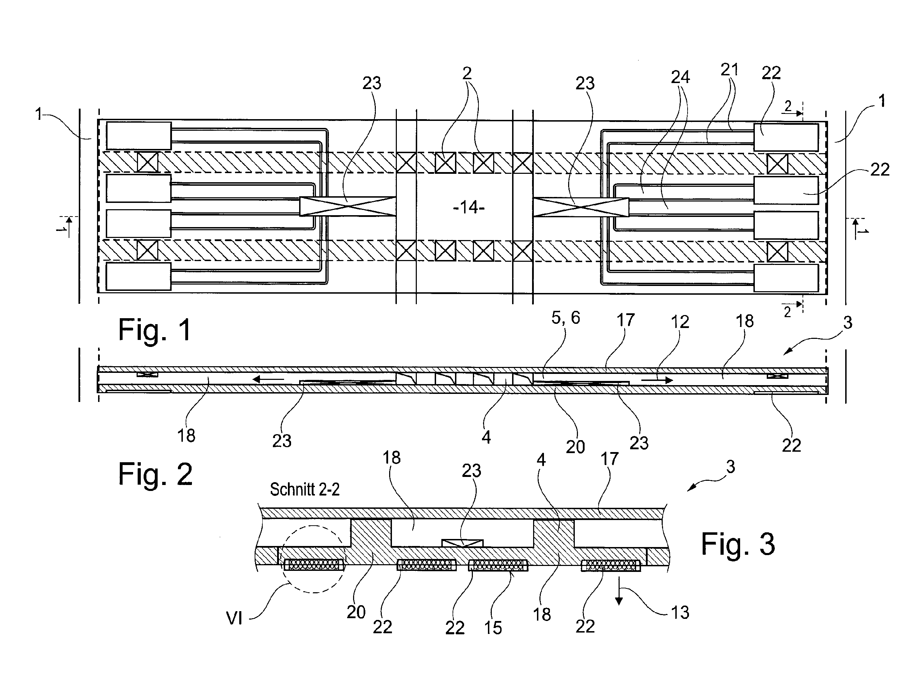

In Figur 1 ist ein Schnitt durch eine thermoaktive Fertigteilplatte dargestellt, die an einer Fassade 1 eines Gebäudes angeschlossen ist und von gebäudeseitigen Pfosten 2 getragen wird. Sie besteht im Wesentlichen aus einer Fertigteilplatte 3, die ihrerseits aus einer oberen Betonschale 17 und einer unteren Betonschale 20 besteht, die über Abstandshalter 4 miteinander verbunden sind.

Im Hohlraum 18 zwischen den beiden Betonschalen 17, 20 entsteht eine Luftzirkulation 5, wobei ausgehend von einem mittleren Gang 14 des Gebäudes nicht näher dargestellte Lufterzeuger vorhanden sind, die über zueinander entgegengesetzt gerichtete Luftkanäle 23 die Luft über Rohrleitungsregister 21 zwischen den Betonschalen 17, 20 verteilen und raumseitig über in der unteren Betonschale 20 angeordnete Ausnehmungen 22 die so temperierte Luft in den Raum einblasen lassen. Es ist nicht dargestellt, dass der Hohlraum 18 noch mit einer Mineralwolle 6 gefüllt sein kann.

Wesentlich ist, die Luftausströmung im Bereich der Ausnehmung 22 sowohl akustisch als auch lüftungstechnisch mit den Mitteln der Erfindung zu verbessern.

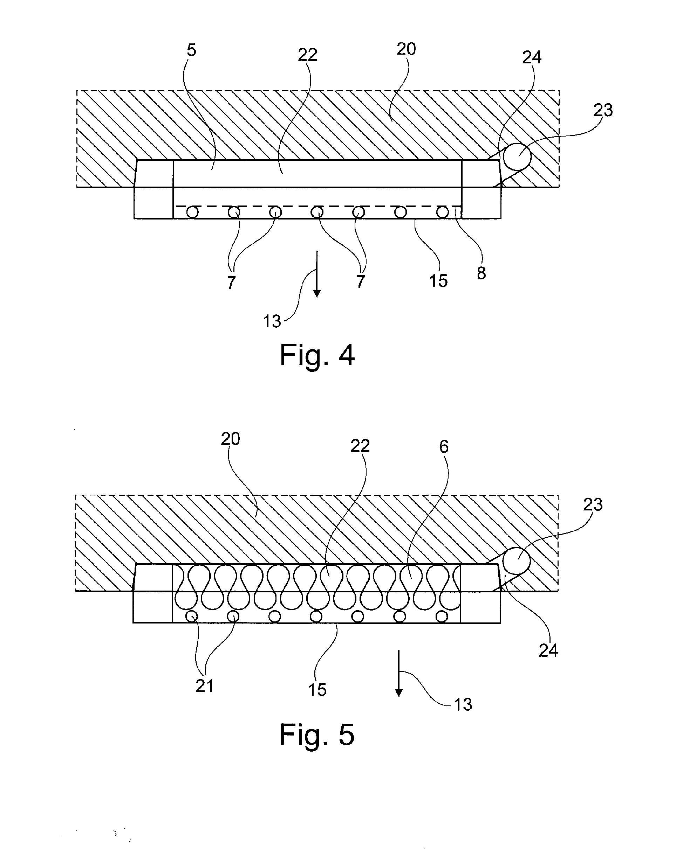

Zu diesem Zweck sehen die Figuren 4 und 5 vor, dass die in der unteren Betonschale 20 halboffen eingelassene Ausnehmung 22 luftschlüssig an den Luftkanal 23 angeschlossen ist und über einen Verteilkanal 24 mit temperierter Luft versorgt wird. Im Bereich der Ausnehmung 22 erfolgt somit eine Luftzirkulation 5.

Die Figur 4 zeigt nun, dass die raumseitige Fläche der Ausnehmung 22 durch eine Funktionsplatte 15 abgedeckt ist, die luftdurchlässig ausgebildet ist. Diese Funktionsplatte 15 kann als perforiertes Metallblech, aus einer Rigipsplatte, aus einer Kunststoffplatte oder aus Kunststoff-Verbundmaterialien bestehen. Die Luft strömt über die nicht näher dargestellten Perforierungen in Pfeilrichtung 13 in den Raum hinein. Es kann noch zusätzlich vorgesehen sein, dass oberhalb der Funktionsplatte 15 mit dem Temperiermedium gefüllte und durchflossene Gitterstäbe 7 angeordnet sind.

Wichtig ist nach der Erfindung, dass oberhalb der Funktionsplatte 15 und oberhalb der Gitterstäbe 7 ein dünnes Vlies 8 aufgelegt ist, welches möglichst die gesamte luftausströmende Fläche der Funktionsplatte 15 abdeckt.

Auf diese Weise wird dafür gesorgt, dass der Luftstrom sich über das gesamte Vlies 8 mit nur geringem Druckabfall verteilt und somit eine Vergleichmäßigung des in Pfeilrichtung 13 aus der Funktionsplatte 15 ausströmenden Luftstromes gewährleistet ist.

Zusätzlich kann gemäß Figur 5 vorgesehen sein, dass die Ausnehmung 22 mit Mineralwolle 6 gefüllt ist.

Auch hier erfolgt eine weitere Verbesserung der akustischen Eigenschaften der Ausnehmung 22, weil die Ausnehmung innenseitig gedämmt wird und somit unerwünschte Schallreflexionen an den Wänden der Ausnehmung im Bereich der Betonschale 20 vermieden werden.

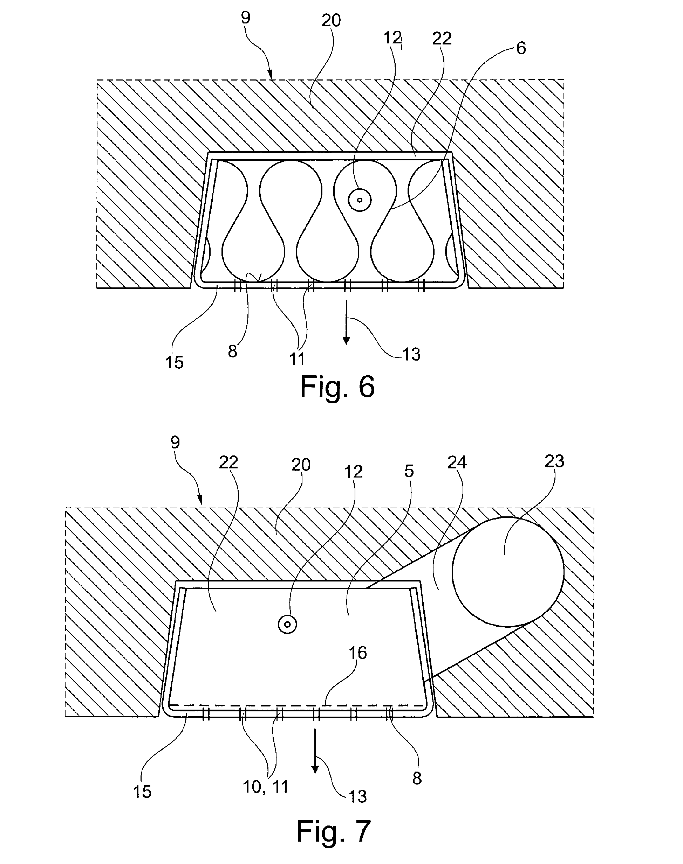

Die Figur 6 zeigt als weitere Ausführungsform, dass die Funktionsplatte 15 auch als oben und stirnseitig offener Ausblaskasten 9 ausgebildet sein kann, so dass dessen Seitenwände sich parallel zu der konisch nach unten öffnenden Ausnehmung 22 erstrecken. Der Ausblaskasten kann auch aus mehreren, miteinander verbundenen Teilen bestehen. Auf diese Weise wird der Ausblaskasten 9 gegen Herausfallen aus der Ausnehmung 22 gesichert, ohne dass es weiterer Befestigungsmittel bedarf.

Im Übrigen kann auch der Innenraum dieses Kastens mit Mineralwolle 6 bedämmt sein.

Es ist angedeutet, dass der in die Ausnehmung 22 einströmende Luftstrom in Pfeilrichtung 12, d. h. parallel zur Oberfläche der Funktionsplatte 15 einströmt und sich über die gesamte Fläche der Funktionsplatte 15 verteilt.

In Figur 6 ist lediglich angedeutet, dass auf der Oberfläche der Funktionsplatte 15 das erfindungsgemäße Vlies 8 aufgelegt ist.

Während demzufolge das Vlies 8 in Figur 4 auf temperierten Gitterstäben 7 aufgelegt ist, liegt bei der Ausführung nach Figur 6 und 7 das Vlies 8 direkt auf der Oberfläche der Funktionsplatte 15 auf.

In der Ausführungsform nach Figur 7 ist die Ausnehmung 22 nicht mit Mineralwolle 6 bedämmt, sondern leer.

Auch hier liegt das Vlies 8 auf der gesamten luftabgebenden Oberfläche der Funktionsplatte 15 auf und wirkt somit einerseits im Sinne der Vergleichmäßigung des in Pfeilrichtung 13 abgegebenen Luftstromes und andererseits zu einer Bedämpfung des Innenraumes der Ausnehmung 22.

Die Funktionsplatte 15 kann hierbei als Lochfläche ausgebildet sein, wobei die einzelnen Ausnehmungen in einer ersten Ausführung durch regelmäßig über deren Oberfläche verteilte Bohrungen 11 ausgebildet sind. Die Dichte der Bohrungen bezogen auf die Fläche der Funktionsplatte, das heißt deren gegenseitiger Abstand, kann bei gleichem Bohrungsdurchmesser unterschiedlich sein. Beispielsweise kann es vorgesehen sein, dass an der Seite der Funktionsplatte, an der die Luft einströmt, wenige Bohrungen pro Quadratzentimeter der Fläche der Funktionsplatte angeordnet sind, während an der gegenüberliegenden Seite der Funktionsplatte eine höhere Dichte der Bohrungsverteilung gegeben ist.

In einer anderen Ausführung kann die Dichte der Bohrungsverteilung gleichmäßig über die Fläche der Funktionsplatte gleich ausgebildet sein, aber der Querschnitt der Bohrungen ist unterschiedlich. In diesem Fall sind an der Seite der Funktionsplatte, an der die Luft einströmt, Bohrungen mit kleinem Durchmesser gleichmäßig verteilt angeordnet, während an der gegenüber liegenden Seite gleichfalls die gleichmäßig verteilten Bohrungen, aber mit größerem Durchmesser angeordnet sind.

Zusätzlich kann auch das Vlies 8 noch Perforationen 16 aufweisen, wie es in Figur 7 dargestellt ist. Die Perforationen im Vlies können entsprechend den beiden oben geschilderten Anwendungsfällen im Hinblick auf die Verteilung und Größe der Bohrungen in der Funktionsplatte in gleicher Weise angeordnet sein.

### Zeichnungslegende

- 1: Fassade
- 2: Pfosten
- 3: Fertigteilplatte
- 4: Abstandshalter
- 5: Luftzirkulation
- 6: Mineralwolle
- 7: Gitterstäbe
- 8: Vlies
- 9: Ausblaskasten
- 10: Lochfläche
- 11: Bohrungen
- 12: Pfeilrichtung
- 13: Pfeilrichtung
- 14: Gang
- 15: Funktionsplatte
- 16: Perforationen
- 17: Betonschale (obere)
- 18: Hohlraum
- 19: Dämmaterial
- 20: Betonschale (untere)
- 21: Rohrleitungsregister
- 22: Ausnehmung
- 23: Luftkanal
- 24: Verteilkanal

## Patentansprüche

1. Thermoaktive Fertigteilplatte bestehend aus mindestens zwei parallel zu einander angeordneten Betonschalen (17, 20) zwischen denen ein Hohlraum (18) angeordnet ist, der gegebenenfalls von einem Dämmmaterial (19) ausgefüllt ist, wobei zwischen der Oberseite der unteren Betonschale (20) und dem Hohlraum (18) ein oder mehrere Luft-Verteilkanäle (23, 24) angeordnet sind, über welche die zu temperierende Luft in eine die Flucht der Deckenseite unterbrechende Ausnehmung (22) eingeleitet wird, die raumdeckenseitig von einer mindestens teilweise luftdurchlässigen Funktionsplatte (15) abgedeckt ist, über welche die temperierte Luft in den Raum unterhalb der Fertigteilplatte einströmt, **dadurch gekennzeichnet, dass** im Bereich der deckenseitigen, in der unteren Betonschale (20) angeordneten Ausnehmung (22) auf der Funktionsplatte (15) ein mindestens teilweise luftdurchlässiges Vlies (8) angeordnet ist.

2. Fertigteilplatte nach Anspruch 1, **dadurch gekennzeichnet, dass** das Vlies (8) aus einem nonwoven-Fasermaterial besteht.

3. Fertigteilplatte nach Anspruch 1, **dadurch gekennzeichnet, dass** das Vlies (8) aus einem gewebten, gewirkten oder gestrickten Textil besteht.

4. Fertigteilplatte nach einem der Ansprüche 1 bis 3, **dadurch gekennzeichnet, dass** das Vlies (8) zusätzliche Perforationen aufweist.

5. Fertigteilplatte nach einem der Ansprüche 1 bis 4, **dadurch gekennzeichnet, dass** die Ausnehmung (22) von einem Dämmmaterial gefüllt ist.

6. Fertigteilplatte nach einem der Ansprüche 1 bis 5, **dadurch gekennzeichnet, dass** die Funktionsplatte (15) als decken- und stirnseitig geöffneter Kasten ausgebildet ist, der sich mit seinen Seitenwänden in die Ausnehmung (22) erstreckt.

7. Fertigteilplatte nach einem der Ansprüche 1 bis 6, **dadurch gekennzeichnet, dass** sich der Querschnitt der Ausnehmung (22) konisch in Richtung zur Funktionsplatte (15) erweitert.

8. Fertigteilplatte nach einem der Ansprüche 1 bis 7, **dadurch gekennzeichnet, dass** sich das Rohrleitungsregister (21) in der Ausnehmung (22) parallel zur Oberfläche der Funktionsplatte (15) erstreckt.

9. Fertigteilplatte nach einem der Ansprüche 1 bis 8, **dadurch gekennzeichnet, dass** das Vlies (8) die gesamte luftführende Fläche der Funktionsplatte (15) abdeckt.

10. Fertigteilplatte nach einem der Ansprüche 1 bis 9, **dadurch gekennzeichnet, dass** die Funktionsplatte (15) aus einem perforierten Metallblech oder einer Gips- oder Rigipsplatte besteht.
